# FASCICULE DE BREVET EUROPEEN

(11) **EP 2 965 333 B1**
(45) Date de publication et mention de la délivrance du brevet: **17.05.2017**
(21) Numéro de dépôt: 14708292.9
(22) Date de dépôt: 07.03.2014
(51) Int. Cl.: H01G 11/04, H01G 11/70, H01M 12/00

(54) **SUPERCONDENSATEUR ASYMETRIQUE A ELECTROLYTE ALCALIN COMPORTANT UNE ELECTRODE NEGATIVE TRIDIMENSIONNELLE ET SON PROCEDE DE FABRICATION**
ASYMMETRISCHER SUPERKONDENSATOR MIT EINEM ALKALISCHEN ELEKTROLYT MIT EINER DREIDIMENSIONALEN NEGATIVELEKTRODE UND VERFAHREN ZUR HERSTELLUNG DAVON
ASYMMETRIC SUPERCAPACITOR WITH ALKALINE ELECTROLYTE COMPRISING A THREE-DIMENSIONAL NEGATIVE ELECTRODE AND METHOD FOR PRODUCING SAME

(30) Priorité: 08.03.2013 FR 1352108
(43) Date de publication de la demande: 13.01.2016
(73) Titulaire: SAFT, 93170 Bagnolet (FR)
(72) Inventeur: CHEVALIER, Stéphanie, F-33200 Bordeaux (FR); DENDARY, Mélanie, F-33200 Eysines (FR); BERNARD, Patrick, F-33000 Bordeaux (FR)
(74) Mandataire: Hirsch & Associés
(86) Numéro de dépôt international: PCT/EP2014/054445
(87) Numéro de publication internationale: WO 2014/135678

(56) Documents cités:
- EP-A1- 2 429 020
- EP-A2- 2 528 076

## Description

### DOMAINE TECHNIQUE

Le domaine technique de l'invention est celui des supercondensateurs asymétriques, également appelés hybrides, à électrolyte alcalin et possédant une électrode positive à base d'hydroxyde de nickel et une électrode négative à base de carbone déposé sur un collecteur de courant.

### ETAT DE LA TECHNIQUE

Le système de stockage d'énergie appelé « supercondensateur », également dénommé « supercapacité », ou bien « condensateur à double couche électrochimique », et en anglais « Electrochemical Double Layer Capacitor (EDLC) », ou encore « ultracapacité », et en anglais « ultracapacitor », est un dispositif permettant de stocker de l'énergie par accumulation d'ions sur deux électrodes servant de collecteurs d'ions lorsqu'une différence de potentiel est imposée entre celles-ci. Le stockage d'énergie dans un supercondensateur est, de fait, d'origine électrostatique, et non pas électrochimique comme dans le cas des accumulateurs.

On utilisera le terme « supercondensateur » dans la suite du présent document et il va de soi que ce vocabulaire désigne également les terminologies équivalentes mentionnées ci-dessus.

Un supercondensateur électrochimique comprend au moins une électrode positive et au moins une électrode négative. Les deux électrodes sont séparées par un séparateur. Le faisceau électrochimique constitué par l'ensemble des électrodes positives et négatives et des séparateurs, est imprégné d'un électrolyte. Généralement, du charbon actif possédant une forte surface spécifique (supérieure à 500 m²/g) est déposé sur la surface des électrodes, ce qui permet d'obtenir de très fortes valeurs de capacitance Un supercondensateur permet de fournir une densité d'énergie de 4 à 6 Wh/kg, qui est environ 40 à 60 fois supérieure à celle d'un condensateur électrolytique.

Il existe différentes variantes de supercondensateurs électrochimiques.

Une première variante a été celle des supercondensateurs symétriques à électrolyte aqueux. Dans ce type de supercondensateur, l'électrode positive et l'électrode négative sont constituées de matériaux similaires ayant la même capacitance. Il s'agit le plus souvent de charbon actif. La demande de brevet EP-A-1 883 937 décrit la fabrication d'une électrode à base de charbon actif pouvant servir à la conception de supercondensateurs symétriques à électrolyte aqueux.

Une seconde variante est celle des supercondensateurs symétriques à électrolyte non-aqueux. Comme décrit dans le brevet US 6,356,432, le supercondensateur comprend un électrolyte non-aqueux, tel que l'acétonitrile, et deux électrodes de carbone. En outre, chaque électrode comporte un liant et une matière électrochimiquement active constituée de charbon actif dont la surface spécifique est supérieure à 2000 m²/g.

La troisième variante de supercondensateur est celle des supercondensateurs asymétriques, également dénommés supercondensateurs hybrides, à électrolyte aqueux. La demande de brevet EP-A-1 156 500 décrit le principe général de fonctionnement de ce type de supercondensateur. Un tel supercondensateur comprend une électrode négative à base de charbon actif et une électrode positive dont le matériau actif peut subir une oxydation réversible. L'électrode positive se charge par un procédé faradique alors que l'électrode négative se charge par accumulation d'ions à l'interface électrode/électrolyte pour former une double couche électrique. L'accumulation de charges se produisant à l'électrode négative correspond à un procédé non faradique.

Il est également connu une quatrième variante de supercondensateur asymétrique non aqueux comprenant un matériau faradique soit à l'électrode positive soit à l'électrode négative.

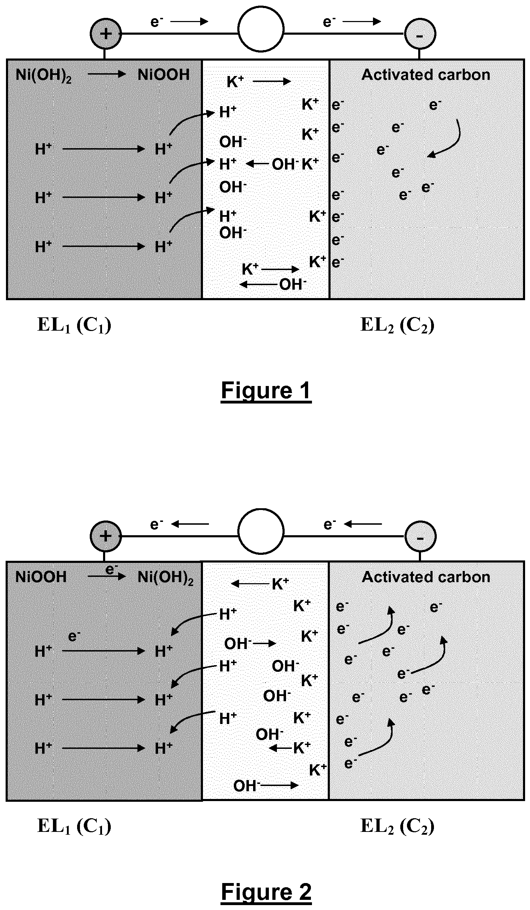

La présente invention concerne plus particulièrement la troisième variante de supercondensateurs dont le principe de fonctionnement est schématiquement représenté aux figures 1 et 2. Ces figures sont l'illustration d'un exemple de supercondensateur asymétrique dans lequel l'électrode positive EL₁ de capacitance C₁ est une électrode à base d'hydroxyde à base de nickel et l'électrode négative EL₂ de capacitance C₂ est une électrode à base de charbon actif. La matière électrochimiquement active positive est un hydroxyde à base de nickel.

Les électrodes positive et négative sont séparées par un séparateur qui est une membrane poreuse imbibée d'électrolyte aqueux alcalin tel que KOH, et/ou NaOH, et/ou LiOH.

La capacitance C₁ de l'électrode positive est proportionnelle à la quantité d'hydroxyde à base de nickel.

La capacitance C₂ de l'électrode négative provient de la formation d'une double couche électrique à l'interface charbon actif/électrolyte. Cette double couche est constituée d'une part de l'accumulation des ions K⁺ de l'électrolyte adsorbés à la surface du charbon actif et d'autre part de l'accumulation d'électrons e⁻ dans le charbon actif venant compenser la charge électrique positive créée par l'adsorption des ions K⁺. La capacitance C₂ est proportionnelle à la surface spécifique du charbon actif. Le mouvement des ions K⁺ et OH⁻ de l'électrolyte a été représenté lors d'une charge (figure 1) et lors d'une décharge (figure 2).

Un supercondensateur asymétrique présente plusieurs avantages par rapport à un supercondensateur symétrique.

D'une part, il présente une capacitance supérieure. En effet, soit CT la capacitance d'un supercondensateur, on a la relation : 1/CT = 1/C₁ + 1/C₂. Dans le cas d'un supercondensateur symétrique, on a C₁ = C₂ d'où CT = C₁/2 = C₂/2. La capacitance d'un supercondensateur asymétrique est donc égale à la moitié de la capacitance d'une des électrodes. Dans le cas d'un supercondensateur asymétrique, la capacitance C₁ de l'électrode à base d'hydroxyde de nickel est largement supérieure à la capacitance C₂ de l'électrode à base de charbon actif ; d'où la relation C₁>>C₂ et CT = (C₁×C₂)/(C₁+C₂) = (C₁×C₂)/C₁ ≈ C₂. La capacitance d'un supercondensateur asymétrique est donc environ égale à la capacitance la plus faible C₂, soit un gain de capacitance d'un facteur 2 par rapport à un supercondensateur symétrique.

D'autre part, un supercondensateur asymétrique à électrolyte aqueux peut fournir une tension de l'ordre de 1,7 à 1,8 V alors qu'un supercondensateur symétrique ne peut généralement fournir qu'une tension inférieure à 0,9 V, d'où un gain d'énergie par rapport aux supercondensateurs symétriques.

Un inconvénient des supercondensateurs asymétriques de l'état de la technique est que leur montage requiert l'emploi d'un matériau tissé de charbon actif, tel qu'une feutrine ou des fibres tissées de carbone. Le matériau tissé de charbon actif est enroulé autour du collecteur de courant de l'électrode négative. Le montage du supercondensateur asymétrique est compliqué puisqu'il nécessite la manipulation et l'empilement de trois pièces : une électrode positive, un collecteur de courant et un tissé de carbone, ce dernier devant être enroulé autour du collecteur de courant.

Un autre inconvénient des supercondensateurs asymétriques de l'état de la technique provient de l'emploi de polytétrafluoroéthylène (PTFE) comme liant de l'électrode négative. Les matières actives à base de carbone utilisées dans l'état de la technique sont mélangées à du PTFE. Or, le PTFE mélangé à la matière active à base de carbone donne un mélange ayant l'aspect d'un latex, qui ne présente pas une bonne tenue mécanique sur le collecteur de courant. On observe une perte de conductivité entre le collecteur de courant et le mélange entraînant une chute de la capacitance au cours du fonctionnement du supercondensateur.

La demande de brevet FRA1154681, qui est un membre de la famille de EP2528076, de la Demanderesse, vise à remplacer les électrodes négatives pour supercondensateurs hybrides constituées d'un tissé de fibres de carbone en appui sur un collecteur de courant plan à base de nickel. Le collecteur de courant tel que décrit dans la demande de brevet FRA1154681 présente une rugosité spécifique de 0,8 à 15µm pour une longueur de base spécifique comprise entre 2 et 200 µm. En outre, l'encre à base de poudre de charbon actif utilisée pour produire l'électrode négative ne contient pas de polytétrafluoroéthylène (PTFE). Néanmoins, une couche d'accrochage comprenant du carbone est présente entre le collecteur continu de courant à base de nickel et le mélange à base de poudre de charbon actif.

Le but de l'invention est d'améliorer les performances électrochimiques d'un supercondensateur asymétrique, en particulier augmenter les capacitances massique et volumique de l'électrode en conservant une excellente tenue mécanique de l'électrode.

### RESUME DE L'INVENTION

L'invention, définie par les caractéristiques de la revendication 1, a pour objet un supercondensateur asymétrique comprenant :
- un électrolyte alcalin ;
- au moins un séparateur ;
- au moins une électrode positive comprenant un hydroxyde à base de nickel et un collecteur de courant à base de nickel ; et
- au moins une électrode négative.

L'électrode négative comprend un collecteur de courant à base de nickel et ayant une structure tridimensionnelle poreuse dans laquelle :
- des pores sont ouverts, le diamètre moyen des pores ouverts étant supérieur ou égal à 100 µm et étant inférieur ou égal à 300 µm ; et
- deux pores ouverts contigus communiquent par au moins une ouverture dont le diamètre moyen est supérieur ou égal à 35 µm et inférieur ou égal à 130 µm.

En outre, ladite structure tridimensionnelle poreuse comporte un mélange comprenant:
- au moins un charbon actif ;
- au moins un additif conducteur électroniquement ; et
- un liant comprenant au moins un polymère élastomère et au moins un polymère épaississant

Selon un mode de réalisation de l'invention, le volume occupé par les pores ouverts représente au moins 50 % du volume du collecteur de courant, de préférence au moins 90 % du volume du collecteur de courant, de préférence au moins 95 % du volume du collecteur de courant.

De préférence, le collecteur de courant de l'électrode négative a une épaisseur comprise entre 0,3 et 1 mm.

Selon un mode de réalisation, la plus grande dimension d'un pore ouvert est supérieure à la plus grande dimension de l'ouverture reliant ce pore à un pore ouvert contigu.

De préférence, le collecteur de courant de l'électrode négative a un grammage compris entre 3 g/dm² et 6 g/dm².

Selon un mode préféré de réalisation, le diamètre moyen des pores ouverts est compris entre 150 µm et 250 µm et le diamètre moyen des ouvertures est compris entre 50 µm et 100 µm.

De préférence, le ratio entre la plus grande dimension du pore ouvert et la plus grande dimension de l'ouverture reliant ce pore à un pore ouvert contigu est supérieur à 1,5.

Selon un mode de réalisation, le charbon actif a une surface active spécifique supérieure ou égale à 500 m²/g, de préférence supérieure ou égale à 900 m²/g.

De préférence, le charbon actif est sous forme de particules de diamètre compris entre 2 et 20 µm.

Selon un mode préféré de réalisation, le charbon actif comporte une quantité d'oxygène mesurée par fluorescence X supérieure à 3 % atomique.

Selon un mode de réalisation, l'additif conducteur électroniquement est choisi dans le groupe constitué de noir de carbone, graphite, graphène, fibres de carbone, nanotubes de carbones et un mélange de ceux-ci.

De préférence, le liant est dépourvu de polytétrafluoroéthylène (PTFE).

Selon un mode préféré de réalisation, le polymère élastomère est choisi dans le groupe consistant en le Styrène-Butadiène (SBR), Styrène-Isoprène (SI), Styrène-éthylène/butylène (SEB), Styrène-Isoprène/butylène (SIB), Styrène-éthylène/propylène (SEP), Styrène-Butadiène-Styrène (SBS), Styrène-Isoprène-Styrène (SIS), Styrène-éthylène/butylène-Styrène (SEBS), Styrène-Isoprène/butylène Styrène (SIBS) et Styrène-éthylène/propylène-Styrène (SEPS) et le polystyrène acrylate (PSA).

Selon un mode de réalisation, le polymère épaississant est choisi dans le groupe consistant en la carboxyméthylcellulose (CMC), l'hydroxyéthylcellulose (HEC), l'hydroxypropylcellulose (HPC), l'hydroxypropylméthylcellulose (HPMC), le polyacideacrylique (PAAc), une gomme xanthane, l'alcool polyvinylique PVA, le polyvinyl de butyral (PVB) et le poly(éthylèneoxyde) (PEO).

Selon un mode de réalisation de l'invention, l'électrode négative comprend :
- entre 60 et 95 % en masse de charbon actif ;
- entre 3 et 20 % en masse d'additif conducteur électroniquement ; et
- entre 1 et 10 % en masse de polymère élastomère et entre 1 et 10 % en masse de polymère épaississant.

Selon un mode de réalisation, le séparateur comprend un matériau non-tissé en polypropylène et éventuellement une membrane en polyéthylène greffé par des groupements acide acrylique.

L'invention, définie par les caractéristiques de la revendication 15, a également pour objet un procédé de fabrication d'un supercondensateur asymétrique à électrolyte alcalin comprenant les étapes suivantes :
a) mise à disposition d'un collecteur de courant à base de nickel et ayant une structure tridimensionnelle poreuse dans laquelle :
   - des pores sont ouverts, le diamètre moyen des pores ouverts étant supérieur ou égal à 100 µm et étant inférieur ou égal à 300 µm ; et
   - deux pores ouverts contigus communiquent par au moins une ouverture dont le diamètre moyen est supérieur ou égal à 35 µm et inférieur ou égal à 130 µm ;
b) formation d'une pâte par mélange de charbon actif avec au moins un additif conducteur électroniquement et un liant comprenant au moins un polymère élastomère et au moins un polymère épaississant et de l'eau ;
c) dépôt de la pâte obtenue à l'étape b) dans le collecteur de courant de l'étape a) ;
d) séchage du collecteur de courant enduit de la pâte ;
e) compression ou calandrage du collecteur de courant enduit de la pâte pour former une électrode négative ;
f) mise à disposition d'au moins une électrode positive comprenant un hydroxyde à base de nickel et un collecteur de courant à base de nickel ;
g) mise à disposition d'au moins un séparateur ;
h) empilement d'au moins une électrode positive, d'au moins un séparateur et d'au moins une électrode négative ;
i) introduction de l'empilement dans un conteneur ; et
j) remplissage du conteneur par un électrolyte alcalin.
Le procédé de fabrication permet d'obtenir le supercondensateur asymétrique selon l'invention.

Selon un mode de réalisation de l'invention, l'étape c) de dépôt de la pâte dans le collecteur de courant comporte une étape d'immersion du collecteur dans un bain de pâte.

Le collecteur de courant de l'électrode négative selon l'invention présente une structure tridimensionnelle particulière permettant l'obtention d'une électrode présentant des propriétés améliorées.

En effet, le choix d'un collecteur tridimensionnel poreux de dimensions choisies dans une gamme spécifique permet d'avoir une bonne adhérence de la matière active au collecteur de courant. Cette bonne adhérence permet une meilleure durée de vie de l'électrode et permet d'obtenir un supercondensateur ayant une meilleure capacitance.

De plus, la couche d'accrochage carbonée améliorant l'accrochage de la matière active au collecteur de courant est supprimée.

Etant donné la meilleure tenue mécanique, il est possible de réduire le taux de liant et donc d'augmenter encore d'avantage les capacitances massique et aussi volumique d'électrode. De fait, l'électrode de technologie mousse permet un gain de capacitance massique d'électrode supérieur à 20 % et un gain de capacitance volumique de l'ordre supérieur à 5 % par rapport au collecteur continu de la demande de brevet FRA1154681.

Le choix d'un collecteur tridimensionnel poreux tel que la mousse permet également une réduction de coût. Par exemple, la mousse métallique de nickel est moins chère que le collecteur continu de nickel avec une couche spécifique d'accrochage.

Un autre avantage de l'invention est de fournir un supercondensateur asymétrique comprenant une électrode dont le collecteur de courant est revêtu d'un mélange comprenant le charbon actif, l'additif conducteur électronique et le liant dépourvu de PTFE.

Le procédé de fabrication du supercondensateur asymétrique de l'invention est simplifié en comparaison à celui d'un supercondensateur comprenant une électrode négative dans laquelle un tissé de charbon actif constitue une pièce à elle-seule qui doit être enroulée en accordéon autour du collecteur de courant. Le montage du faisceau électrochimique de l'invention est simplifié puisqu'il s'agit d'un empilement classique de plaques.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES FIGURES

Les figures 1 et 2 sont des représentations schématiques du mouvement des ions lors du fonctionnement d'un supercondensateur asymétrique à électrode positive à hydroxyde à base de nickel et à électrolyte alcalin respectivement lors d'une charge, puis lors d'une décharge.
La figure 3 est une représentation schématique d'un exemple d'une structure poreuse tridimensionnelle du collecteur de courant selon l'invention.

### EXPOSE DE MODES DE REALISATION DE L'INVENTION

L'invention concerne un supercondensateur asymétrique, également appelé hybride, comprenant un électrolyte alcalin, au moins un séparateur, au moins une électrode positive et au moins une électrode négative.

L'électrolyte du supercondensateur est choisi de telle sorte à être adapté aux compositions des électrodes. Selon un mode de réalisation de l'invention, l'électrolyte est un électrolyte aqueux alcalin, tel que l'hydroxyde de potassium (KOH) et/ou l'hydroxyde de lithium (LiOH) et/ou l'hydroxyde de sodium (NaOH), de préférence à une concentration supérieure à 5 N afin de garantir une forte conductivité ionique. De préférence, l'électrolyte alcalin est l'hydroxyde de potassium (KOH).

En outre, le séparateur est un séparateur couramment utilisé dans le domaine des accumulateurs alcalins, tels que ceux utilisés dans les systèmes de batterie Ni-Cd. Le séparateur peut comprendre un matériau non-tissé en polypropylène ou polyéthylène et éventuellement une membrane comprenant du polyéthylène greffé par des groupements acide acrylique.

L'électrode positive comporte une matière active principalement constituée d'hydroxyde à base de nickel et un collecteur de courant à base de nickel. On entend par « hydroxyde à base de nickel » un hydroxyde de nickel, un hydroxyde contenant principalement du nickel, mais également un hydroxyde de nickel contenant au moins un hydroxyde syncristallisé d'un élément choisi par exemple parmi le zinc (Zn), le cadmium (Cd), le magnésium (Mg) et l'aluminium (Al), et au moins un hydroxyde syncristallisé d'un élément choisi parmi le cobalt (Co), le manganèse (Mn), l'aluminium (Al), l'yttrium (Y), le calcium (Ca), le zirconium (Zr), le cuivre (Cu). Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel. Par exemple, le collecteur de courant de cette électrode positive comporte un fritté de nickel adapté aux applications de puissance, c'est-à-dire que le courant de décharge peut dépasser 500 A pour un supercondensateur unitaire.

L'électrode négative comprend une matière active à base de carbone et un collecteur de courant à base de nickel. Le collecteur de courant de l'électrode négative a une structure tridimensionnelle poreuse dans laquelle :
- des pores sont ouverts, le diamètre moyen des pores ouverts étant supérieur ou égal à 100 µm et étant inférieur ou égal à 300 µm ; et
- deux pores ouverts contigus communiquent par au moins une ouverture dont le diamètre moyen est supérieur ou égal à 35 µm et inférieur ou égal à 130 µm ;

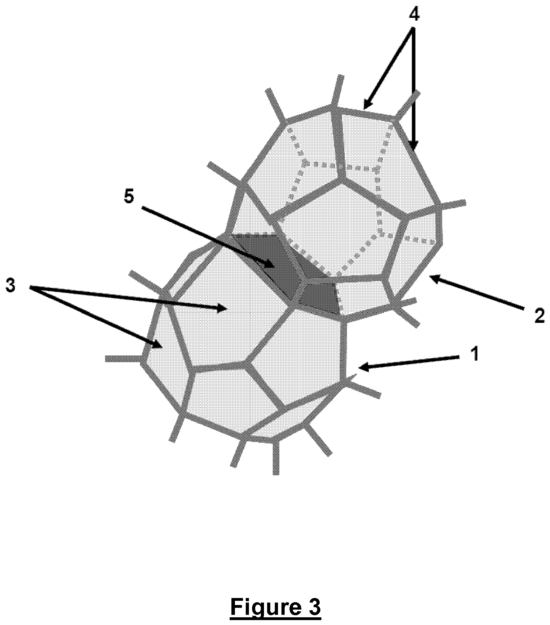

La figure 3 représente de manière schématique une structure poreuse tridimensionnelle du collecteur de courant de l'électrode négative selon l'invention. Deux pores ouverts contigus, notés 1 et 2 communiquant l'un avec l'autre sont représentés sur cette figure 3. Chaque pore est schématisé sous forme d'un polyèdre, c'est-à-dire une forme géométrique à trois dimensions ayant des faces planes polygonales 3 qui se rencontrent selon des segments de droite 4, qu'on appellera ici brins ou arêtes. Les deux pores contigus 1 et 2 ont plusieurs brins en commun.

Les brins communs à deux polyèdres définissent une ouverture 5 qui met en communication le volume de l'un des deux pores ouverts avec le volume du pore ouvert contigu. Cette ouverture constitue un passage à travers lequel un mélange ou pâte circule d'un pore à un autre au cours du procédé d'enduction, ce qui permet un remplissage homogène des pores du collecteur de courant. On peut assimiler l'ouverture à une surface plane, ouverture dont le diamètre moyen est supérieur ou égal à 35 µm et est inférieur ou égal à 130 µm.

Préférentiellement, le diamètre moyen des pores ouverts est compris entre 150 µm et 250 µm et le diamètre moyen des ouvertures est compris entre 50 µm et 100 µm.

De plus, la plus grande dimension d'un pore ouvert est supérieure à la plus grande dimension de l'ouverture reliant ce pore à un pore ouvert contigu.

En outre, le volume occupé par les pores ouverts de la structure tridimensionnelle représente typiquement au moins 50 % du volume du collecteur de courant, de préférence au moins 90 % du volume du collecteur de courant, et de préférence encore au moins 95 % du volume du collecteur de courant. De manière préférentielle, le volume occupé par les pores ouverts de la structure tridimensionnelle est supérieur à 97 % du volume du collecteur de courant.

La structure du pore a été décrite en référence à une forme géométrique de type polyèdre mais il est entendu que la forme du pore n'est pas limitée à cette géométrie et peut aussi être de forme sensiblement sphérique, ou ovoïdale par exemple.

De même, l'ouverture a été décrite comme étant une surface plane constituée par une face plane polygonale commune. Cependant, l'ouverture n'est pas limitée à une forme plane mais peut aussi être tridimensionnelle. Le diamètre d'un pore peut alors être défini comme le diamètre de la sphère équivalente en volume, et le diamètre d'une ouverture peut être défini comme le diamètre du cercle équivalent en surface. Le diamètre moyen des pores correspond alors à la moyenne arithmétique de l'ensemble des pores de la structure poreuse et le diamètre moyen des ouvertures correspond à la moyenne arithmétique de l'ensemble des ouvertures de la structure poreuse.

Typiquement, l'épaisseur du collecteur de courant de l'électrode négative est comprise entre 0,3 et 1,0 mm.

La densité ou grammage du collecteur de courant de l'électrode négative a une influence sur l'épaisseur des brins de nickel délimitant les pores et par conséquent sur les propriétés mécaniques du collecteur de courant et sur sa conductivité électrique.

Selon l'invention, le grammage du collecteur de courant de l'électrode négative est de préférence compris entre 3 et 6 g/dm². En dessous de 3 g/dm², la rigidité du collecteur de courant et sa conductivité électrique peuvent être insuffisantes pour le format de supercondensateur recherché. Par exemple, la résistance à l'allongement, la résistance à la déchirure et la résistance à la soudure peuvent devenir insuffisantes. Au-dessus de 6 g/dm², le collecteur de courant peut devenir trop rigide et il devient cher à fabriquer.

En outre, la structure tridimensionnelle poreuse comporte un mélange également appelé pâte, comprenant :
- au moins un charbon actif ;
- au moins un additif conducteur électroniquement ; et
- un liant comprenant au moins un polymère élastomère et au moins un polymère épaississant.

Il va maintenant être décrit les principaux constituants de la pâte.

Le matériau électrochimiquement actif de l'électrode négative est un charbon actif. Selon l'invention, le charbon actif est de préférence un matériau carboné massif constitué de particules de diamètre supérieur à 1 µm, de préférence de l'ordre de 2 à 20 µm et de préférence encore supérieur à 10 µm. De préférence, le matériau actif n'est pas sous forme de nanotubes de carbone.

De préférence, la surface active spécifique du charbon actif est supérieure ou égale à 500 m²/g et de préférence encore supérieure à 900 m²/g.

De manière préférentielle, la quantité d'oxygène O contenu dans le charbon actif mesurée par exemple par fluorescence X est supérieure à 3 % atomique.

L'additif conducteur peut être choisi parmi le noir de carbone, un graphite, un graphène, les fibres de carbone, les nanotubes de carbones, ou un mélange de ceux-ci dans une proportion allant généralement de 3 à 20 % en poids.

Le polymère élastomère peut être choisi dans le groupe comprenant le Styrène-Butadiène (SBR), Styrène-Isoprène (SI), Styrène-éthylène/butylène (SEB), Styrène-Isoprène/butylène (SIB), Styrène-éthylène/propylène (SEP), Styrène-Butadiène-Styrène (SBS), Styrène-Isoprène-Styrène (SIS), Styrène-éthylène/butylène-Styrène (SEBS), Styrène-Isoprène/butylène Styrène (SIBS) et Styrène-éthylène/propylène-Styrène (SEPS), le polystyrène acrylate (PSA).

Un épaississant dans le cadre de l'invention est défini comme un composé chimique permettant de multiplier par 10 la viscosité d'un composé ou dans le cadre de l'invention du mélange ou pâte. La viscosité étant mesurée à l'aide d'un viscosimètre rotatif de type Brookfield, la viscosité du mélange est de l'ordre de 300 Pa.s à 20°C. Ainsi, le polymère épaississant peut être choisi parmi la carboxyméthylcellulose (CMC), l'hydroxyéthylcellulose (HEC), l'hydroxypropylcellulose (HPC), l'hydroxypropylméthylcellulose (HPMC), le polyacideacrylique (PAAc), une gomme xanthane, l'alcool polyvinylique PVA, le polyvinyl de butyral (PVB), le poly(éthylèneoxyde) (PEO), sans être limitatif.

Selon l'invention, le liant est de préférence dépourvu de polytétrafluoroéthylène (PTFE).

Par exemple, l'électrode négative d'un supercondensateur asymétrique selon l'invention comprend :
- entre 60 et 95 % en masse de charbon actif ;
- entre 3 et 20 % en masse d'additif conducteur électroniquement ; et
- entre 1 et 10 % en masse de polymère élastomère et entre 1 et 10 % en masse de polymère épaississant.

Le procédé de fabrication d'un supercondensateur asymétrique à électrolyte alcalin selon un mode de réalisation de l'invention va maintenant être décrit.

Tout d'abord, un collecteur de courant à base de nickel et ayant une structure tridimensionnelle poreuse telle que décrite précédemment est mis à disposition en vue de fabriquer l'électrode négative.

Puis une pâte est formée par mélange de charbon actif avec au moins un additif conducteur électroniquement et un liant comprenant au moins un polymère élastomère et au moins un polymère épaississant et de l'eau tels que ceux décrits précédemment.

Ensuite, la pâte obtenue est déposée dans le collecteur de courant. Durant cette étape d'empâtage, le collecteur de courant est enduit de la pâte constituée d'un mélange comprenant essentiellement le charbon actif, au moins un composé bon conducteur électronique et un liant permettant à la fois une bonne adhérence de la pâte au collecteur de courant une fois séchée et une bonne cohésion de la matière active. Par exemple, cette étape de dépôt de la pâte dans le collecteur de courant comporte une étape d'immersion du collecteur dans un bain de pâte.

En outre, le procédé comporte une étape de séchage du collecteur de courant enduit de la pâte, visant à faire évaporer le solvant qui a servi à obtenir la pâte.

De plus, le procédé comprend une étape de compression ou calandrage du collecteur de courant enduit de la pâte pour former une électrode négative. Cette étape de calandrage vise à ajuster la porosité de l'électrode négative. Pendant cette étape, le collecteur de courant passe par exemple entre deux rouleaux exerçant sur chaque face de l'électrode une force dirigée selon l'épaisseur du collecteur de courant.

Le procédé d'enduction conduit à une électrode dont la structure est différente de celle d'une électrode comprenant un collecteur de courant bidimensionnel. En effet, lorsqu'on enduit un collecteur de courant bidimensionnel, tel qu'un feuillard métallique ajouré ou non, la pâte se dépose dans les parties évidées du collecteur et à la surface des parties pleines du collecteur. L'épaisseur de l'électrode est donc supérieure à l'épaisseur du collecteur de courant puisqu'il faut tenir compte de l'épaisseur de pâte à la surface des parties pleines du collecteur de courant. Or, dans le collecteur de courant selon l'invention, il n'y a pas d'épaisseur de pâte au-dessus de la surface du collecteur de courant car le procédé permet de remplir les pores de pâte.

En outre, les caractéristiques du collecteur de courant telles que son épaisseur de 0,3 à 1 mm, le diamètre moyen des pores de 100 à 300 µm et le diamètre moyen des ouvertures de 35 à 130 µm sont celles de l'électrode négative fabriquée et prête à être associée à un séparateur et à une électrode positive pour fabriquer un faisceau électrochimique. Elles ne correspondent pas au collecteur de courant avant enduction. En effet, les étapes d'enduction et de calandrage compriment le collecteur de courant et donc réduisent de manière uniforme son épaisseur.

De plus, le diamètre moyen des ouvertures de 35 à 130 µm assure un bon remplissage du collecteur en relation avec les caractéristiques du matériau actif et de l'additif conducteur, notamment leurs tailles de particules et leurs surfaces développées, et aussi pour les caractéristiques mécaniques lors de la fabrication de l'électrode et pendant le processus de décharge du matériau.

Les tailles de pores du collecteur de courant ont une influence sur l'empâtage et sur les performances du supercondensateur à fort régime de décharge. En effet, si les pores ont un diamètre moyen inférieur ou égal à 100 µm, le remplissage des pores par la pâte est limité. Si les pores ont un diamètre moyen supérieur ou égal à 300 µm, les performances en décharge sous fort courant sont réduites car la distance moyenne des particules de matière actives au collecteur de courant est trop grande.

En outre, la pâte étant introduite à l'intérieur de la structure tridimensionelle métallique du collecteur de courant, l'électrode a une excellente tenue mécanique : il n'y a aucun souci d'adhésion de la matière à la surface du collecteur de courant. Aucun critère de rugosité spécifique n'est nécessaire.

Le procédé de fabrication du supercondensateur asymétrique à électrolyte alcalin selon l'invention se poursuit par la mise à disposition d'au moins une électrode positive comprenant un hydroxyde à base de nickel et un collecteur de courant à base de nickel et d'au moins un séparateur.

Le supercondensateur asymétrique est ensuite assemblé par empilement classique des différentes électrodes positives et négatives et des séparateurs de telle sorte qu'un séparateur soit intercalé entre une électrode positive et une électrode négative.

Cet empilement est ensuite mis en place dans un conteneur. Le conteneur est rempli par un électrolyte alcalin soit avant, soit après la mise en place des électrodes et des séparateurs dans le conteneur.

Les électrodes positives sont reliées entre elles et constituent la borne de sortie de courant positive du supercondensateur et les électrodes négatives sont reliées entre elles et constituent la borne de sortie de courant négative du supercondensateur.

Le conteneur est fermé de manière étanche par un couvercle. En général, le couvercle supporte les bornes de sortie de courant.

En outre, la capacitance de l'électrode positive est largement excédentaire par rapport à la capacitance de la négative.

Un tel supercondensateur asymétrique selon un mode de réalisation de peut être utilisé dans différentes applications industrielles, comme par exemple le domaine des applications ferroviaires, le démarrage de moteur diésel.

### EXEMPLES

Un supercondensateur hybride à électrolyte alcalin selon l'art antérieur a été réalisé. Il comprend une électrode négative A du supercondensateur obtenue par revêtement d'une encre à base de poudre de 80 % de charbon actif, de noir de carbone 10 % et de liant HPMC 5 % et SBR 5 % sur un collecteur continu rugueux tel que décrit dans la demande de brevet FR 11 54681. L'épaisseur totale est de 700 µm.

Un supercondensateur selon l'invention a été réalisé. Il comporte une électrode négative B obtenue par empâtage d'une pâte à base de poudre de charbon actif 82 %, de noir de carbone 10 % et de liant HPMC 5 % et SBR 3 %.

La pâte est réalisée selon la composition pondérale ci-avant. Dans une solution aqueuse d'HPMC représentant 70 % du poids des autres composants, est ajouté dans l'ordre : le noir de carbone, le SBR et le charbon actif, afin d'obtenir une pâte de viscosité comprise entre environ 200 et 2000 Pa.s à 20°C. Cette composition est ensuite empâtée dans une structure poreuse tridimensionnelle de nickel d'épaisseur initiale 1,6 mm, de grammage 4,5 g/dm², de porosité 97 %, prélaminée à l'épaisseur de 1,1 mm pour obtenir la quantité désirée de matière active dans l'électrode négative. Le diamètre moyen des pores des électrodes négatives obtenues est de 200 µm et le diamètre moyen des ouvertures est de 70 µm. Chaque électrode négative subit ensuite un séchage pour évaporer le solvant de la pâte, ici de l'eau, dans un four à 150°C. Les électrodes sont ensuite laminées pour obtenir une porosité finale de 70 %. L'épaisseur finale de chaque électrode négative est de 700 µm.

Des supercondensateurs asymétriques sont ensuite assemblés en utilisant les électrodes négatives A et B, encadrées par deux électrodes positives séparées par un séparateur en polypropylène non tissé intercalé entre les électrodes. L'empilement est ensuite mis en place dans un conteneur plastique. Un électrolyte alcalin KOH à 7N est ensuite introduit dans le conteneur. Enfin, le conteneur est fermé de manière étanche par un couvercle. La capacitance des électrodes positives est largement excédentaire par rapport à la capacitance de l'électrode négative.

Les supercondensateurs sont chargés à la température de 20°C à un régime de 10 mA/cm² jusqu'à une tension de 1,3 V, laissés au repos pendant 5 secondes, puis déchargés à un régime de 10 mA/cm² jusqu'à une tension de 0,3 V.

On mesure alors la capacitance du supercondensateur et connaissant la masse et le volume de l'électrode négative, on calcule la capacitance massique et volumique.

Les résultats sont illustrés dans le tableau 1 suivant :

**Tableau 1**

| Supercondensateur asymétrique avec les électrodes du type | A | B |
|---|---|---|
| Capacitance volumique (F/cm³) | 67 | 70 |
| Capacitance massique (F /g) | 60 | 72 |

Ces résultats montrent que l'électrode négative selon l'invention présente une capacitance volumique supérieure de 5 % à celle de l'électrode négative obtenue par revêtement sur le collecteur de courant rugueux tel que décrit dans la demande de brevet FR 11 54681. Sa capacitance massique est supérieure d'environ + 20 %.

Ainsi, l'invention permet d'augmenter la capacitance massique et volumique de l'électrode négative pour supercondensateur hybride tout en conservant une excellente tenue mécanique de l'électrode. En outre, l'invention permet également de réduire le coût de fabrication d'un supercondensateur puisque le collecteur continu à base de nickel est environ 3 fois plus cher au m² que la mousse métallique de nickel.

Des électrodes C, D et E en dehors du domaine de l'invention ont été réalisées.

Pour cela, une pâte de composition identique à celle utilisée pour former l'électrode B a été réalisée. Cette composition est ensuite empâtée dans une structure poreuse tridimensionnelle de nickel d'épaisseur initiale 1,6 mm, de grammage 4,5 g/dm², de porosité 97%, prélaminée à l'épaisseur de 1,1 mm pour obtenir la quantité désirée de matière active dans l'électrode.

Pour l'électrode C, le diamètre moyen des pores du collecteur de courant est de 380 µm et le diamètre moyen des ouvertures est de 100 µm.

Pour l'électrode D, le diamètre moyen des pores du collecteur de courant est de 120 µm et le diamètre moyen des ouvertures est de 30 µm.

Pour l'électrode E, le diamètre moyen des pores du collecteur de courant est de 280 µm et le diamètre moyen des ouvertures est de 180 µm.

Les autres étapes de fabrication des électrodes C, D et E et des supercondensateurs correspondants sont identiques respectivement à celles de l'électrode B et du supercondensateur correspondant.

Comme précédemment, la capacitance volumique des supercondensateurs a été mesurée. Les résultats sont illustrés dans le tableau 2 suivant :

**Tableau 2**

| Supercondensateur asymétrique avec les électrodes du type | B | C | D | E |
|---|---|---|---|---|
| Diamètre moyen des pores (µm) | 200 | 380 | 120 | 280 |
| Diamètre moyen des ouvertures (µm) | 70 | 100 | 30 | 180 |
| Capacitance volumique (F/cm³) | 70 | 64 | 45 | 12 |

La capacitance volumique du supercondensateur de type C est de 64 F/cm³, i.e. inférieure à la capacitance volumique du supercondensateur de type B qui est de 70 F/cm³. On comprend donc que lorsque la taille des pores de la structure tridimensionnelle est trop importante, la distance des particules de charbon actif au collecteur de courant devient trop importante et que les performances électriques sont dégradées.

La capacitance volumique du supercondensateur de type D est de 45 F/cm³, ce qui est inférieur à la capacitance volumique du supercondensateur de type B qui est de 70 F/cm³. On comprend donc que lorsque la taille des ouvertures est trop petite, la pénétration de la pâte dans l'électrode devient difficile, et que la quantité de matière active est réduite. Une baisse de la densité de matière active déposée sur le collecteur de courant de 35 % a été constatée par rapport à celle pour le supercondensateur de type B. Il en résulte une dégradation des performances électriques.

La capacitance volumique du supercondensateur de type E est de 12 F/cm³, ce qui est très inférieur à la capacitance volumique du supercondensateur de type B qui est de 70 F/cm³. On comprend donc que lorsque la taille des ouvertures est trop grande, les propriétés mécaniques de l'électrode sont réduites et conduisent lors des charges et décharges successives à l'expulsion de la matière active si ses particules ont une taille trop faible devant la taille des ouvertures. Ceci conduit probablement à la présence de particules dans le séparateur amenant à la création de micro court-circuits entre l'électrode positive et l'électrode négative, et en conséquence une performance électrochimique réduite.

## Revendications

1. Supercondensateur hybride comprenant :
- un électrolyte alcalin ;
- au moins un séparateur ;
- au moins une électrode positive comprenant un hydroxyde à base de nickel et un collecteur de courant à base de nickel ; et
- au moins une électrode négative comprenant un collecteur de courant à base de nickel, ledit collecteur de courant de l'électrode négative étant fait d'une structure tridimensionnelle poreuse dans laquelle :
• des pores sont ouverts,
ladite structure tridimensionnelle poreuse est revêtue d'un mélange comprenant:
• au moins un charbon actif ;
• au moins un additif conducteur électroniquement ; et
• un liant comprenant au moins un polymère élastomère et au moins un polymère épaississant,
le supercondensateur hybride étant **caractérisé en ce que**
le diamètre moyen des pores ouverts étant supérieur ou égal à 100 µm et étant inférieur ou égal à 300 µm;
et deux pores ouverts contigus (1,2) communiquent par au moins une ouverture (5) dont le diamètre moyen est supérieur ou égal à 35 µm et inférieur ou égal à 130 µm.

2. Supercondensateur hybride selon la revendication 1, dans lequel le volume occupé par les pores ouverts représente au moins 50 % du volume du collecteur de courant, de préférence au moins 90 % du volume du collecteur de courant, de préférence au moins 95 % du volume du collecteur de courant.

3. Supercondensateur hybride selon la revendication 1 ou 2, dans lequel le collecteur de courant de l'électrode négative a une épaisseur comprise entre 0,3 et 1 mm.

4. Supercondensateur hybride selon l'une quelconque des revendications 1 à 3, dans lequel la plus grande dimension d'un pore ouvert (1, 2) est supérieure à la plus grande dimension de l'ouverture (5) reliant ce pore à un pore ouvert contigu.

5. Supercondensateur hybride selon l'une quelconque des revendications 1 à 4, dans lequel le collecteur de courant de l'électrode négative a un grammage compris entre 3 g/dm² et 6 g/dm².

6. Supercondensateur hybride selon l'une quelconque des revendications 1 à 5, dans lequel le diamètre moyen des pores ouverts (1, 2) est compris entre 150 µm et 250 µm et le diamètre moyen des ouvertures (5) est compris entre 50 µm et 100 µm.

7. Supercondensateur hybride selon l'une quelconque des revendications 1 à 6, dans lequel le charbon actif a une surface active spécifique supérieure ou égale à 500 m²/g, de préférence supérieure ou égale à 900 m²/g.

8. Supercondensateur hybride selon l'une quelconque des revendications 1 à 7, dans lequel le charbon actif est sous forme de particules de diamètre compris entre 2 et 20 µm.

9. Supercondensateur hybride selon l'une quelconque des revendications 1 à 8, dans lequel le charbon actif comporte une quantité d'oxygène mesurée par fluorescence X supérieure à 3 % atomique.

10. Supercondensateur hybride selon l'une quelconque des revendications 1 à 9, dans lequel l'additif conducteur électroniquement est choisi dans le groupe constitué de noir de carbone, graphite, graphène, fibres de carbone, nanotubes de carbones et un mélange de ceux-ci.

11. Supercondensateur hybride selon l'une quelconque des revendications 1 à 10, dans lequel le liant est dépourvu de polytétrafluoroéthylène (PTFE).

12. Supercondensateur hybride selon l'une quelconque des revendications 1 à 11, dans lequel le polymère élastomère est choisi dans le groupe consistant en le Styrène-Butadiène (SBR), Styrène-Isoprène (SI), Styrène-éthylène/butylène (SEB), Styrène-Isoprène/butylène (SIB), Styrène-éthylène/propylène (SEP), Styrène-Butadiène-Styrène (SBS), Styrène-Isoprène-Styrène (SIS), Styrène-éthylène/butylène-Styrène (SEBS), Styrène-Isoprène/butylène Styrène (SIBS) et Styrène-éthylène/propylène-Styrène (SEPS) et le polystyrène acrylate (PSA).

13. Supercondensateur hybride selon l'une quelconque des revendications 1 à 12, dans lequel le polymère épaississant est choisi dans le groupe consistant en la carboxyméthylcellulose (CMC), l'hydroxyéthylcellulose (HEC), l'hydroxypropylcellulose (HPC), l'hydroxypropylméthylcellulose (HPMC), le polyacideacrylique (PAAc), une gomme xanthane, l'alcool polyvinylique PVA, le polyvinyl de butyral (PVB) et le poly(éthylèneoxyde) (PEO).

14. Supercondensateur hybride selon l'une quelconque des revendications 1 à 13, dans lequel l'électrode négative comprend :
- entre 60 et 95 % en masse de charbon actif ;
- entre 3 et 20 % en masse d'additif conducteur électroniquement ; et
- entre 1 et 10 % en masse de polymère élastomère et entre 1 et 10 % en masse de polymère épaississant.

15. Procédé de fabrication d'un supercondensateur hybride à électrolyte alcalin comprenant les étapes suivantes :
a) mise à disposition d'un collecteur de courant à base de nickel, ledit collecteur de courant étant fait d'une structure tridimensionnelle poreuse dans laquelle :
- des pores sont ouverts ;
b) formation d'une pâte par mélange de charbon actif avec au moins un additif conducteur électroniquement et un liant comprenant au moins un polymère élastomère et au moins un polymère épaississant et de l'eau ;
c) dépôt de la pâte obtenue à l'étape b) dans le collecteur de courant de l'étape a) ;
d) séchage du collecteur de courant enduit de la pâte ;
e) compression ou calandrage du collecteur de courant enduit de la pâte pour former une électrode négative ;
f)mise à disposition d'au moins une électrode positive comprenant un hydroxyde à base de nickel et un collecteur de courant à base de nickel ;
g) mise à disposition d'au moins un séparateur ;
h) empilement d'au moins une électrode positive, d'au moins un séparateur et d'au moins une électrode négative ;
i) introduction de l'empilement dans un conteneur ; et
j) remplissage du conteneur par un électrolyte alcalin,
le procédé étant **caractérisé en ce que** le diamètre moyen des pores ouverts étant supérieur ou égal à 100 µm et étant inférieur ou égal à 300 µm; et deux pores ouverts contigus (1,2) communiquent par au moins une ouverture (5) dont le diamètre moyen est supérieur ou égal à 35 µm et inférieur ou égal à 130 µm.

## Patentansprüche

1. Hybrider Superkondensator, welcher Folgendes umfasst:
- einen alkalischen Elektrolyten;
- mindestens einen Separator;
- mindestens eine positive Elektrode, die ein auf Nickel basiertes Hydroxyd und einen auf Nickel basierten Stromkollektor umfasst; und
- mindestens eine negative Elektrode, die einen auf Nickel basierten Stromkollektor umfasst, wobei der Stromkollektor der negativen Elektrode aus einer porösen dreidimensionalen Struktur gebildet ist, in der:
• Poren offen sind,
die poröse dreidimensionale Struktur mit einer Mischung überzogen ist, die Folgendes umfasst:
• mindestens eine Aktivkohle;
• mindestens einen elektronisch leitfähigen Zusatz ; und
• ein Bindemittel, das mindestens ein elastomeres Polymer und mindestens ein Verdickungspolymer umfasst,
wobei der hybride Superkondensator **dadurch gekennzeichnet ist dass**
der mittlere Durchmesser der offenen Poren größer oder gleich 100 µm und kleiner oder gleich 300 µm ist;
und zwei benachbarte offene Poren (1, 2) durch mindestens eine Öffnung (5) kommunizieren, deren mittlerer Durchmesser größer oder gleich 35 µm und kleiner oder gleich 130 µm ist.

2. Hybrider Superkondensator nach Anspruch 1, wobei das Volumen, das von den offenen Poren eingenommen wird, mindestens 50% des Volumens des Stromkollektors, vorzugsweise mindestens 90% des Volumens des Stromkollektors, vorzugsweise mindestens 95% des Volumens des Stromkollektors, darstellt.

3. Hybrider Superkondensator nach Anspruch 1 oder 2, wobei der Stromkollektor der negativen Elektrode eine Dicke zwischen 0,3 und 1 mm aufweist.

4. Hybrider Superkondensator nach einem der Ansprüche 1 bis 3, wobei die größte Abmessung einer offenen Pore (1, 2) größer ist als die größte Abmessung der Öffnung (5), welche diese Pore mit einer benachbarten offenen Pore verbindet.

5. Hybrider Superkondensator nach einem der Ansprüche 1 bis 4, wobei der Stromkollektor der negativen Elektrode ein Flächengewicht zwischen 3 g/dm² und 6 g/dm² aufweist.

6. Hybrider Superkondensator nach einem der Ansprüche 1 bis 5, wobei der mittlere Durchmesser der offenen Poren (1, 2) zwischen 150 µm und 250 µm beträgt, und der mittlere Durchmesser der Öffnungen (5) zwischen 50 µm und 100 µm beträgt.

7. Hybrider Superkondensator nach einem der Ansprüche 1 bis 6, wobei die Aktivkohle eine spezifische aktive Oberfläche von größer oder gleich 500 m²/g, vorzugsweise größer oder gleich 900 m²/g, aufweist.

8. Hybrider Superkondensator nach einem der Ansprüche 1 bis 7, wobei die Aktivkohle in Form von Teilchen mit einem Durchmesser zwischen 2 und 20 µm vorliegt.

9. Hybrider Superkondensator nach einem der Ansprüche 1 bis 8, wobei die Aktivkohle eine durch Röntgenfluoreszenz gemessene Sauerstoffmenge von mehr als 3 Atomprozent enthält.

10. Hybrider Superkondensator nach einem der Ansprüche 1 bis 9, wobei der elektronisch leitfähige Zusatz aus der Gruppe ausgewählt ist, die aus Ruß, Graphit, Graphen, Kohlefasern, Kohlenstoff-Nanoröhren und einer Mischung von diesen besteht.

11. Hybrider Superkondensator nach einem der Ansprüche 1 bis 10, wobei das Bindemittel frei von Polytetrafluorethylen (PTFE) ist.

12. Hybrider Superkondensator nach einem der Ansprüche 1 bis 11, wobei das elastomere Polymer aus der Gruppe ausgewählt ist, die aus Styrol-Butadien (SBR), Styrol-Isopren (SI), Styrol-Ethylen/Butylen (SEB), Styrol-Isopren/Butylen (SIB), Styrol-Ethylen/Propylen (SEP), Styrol-Butadien-Styrol (SBS), Styrol-Isopren-Styrol (SIS), Styrol-Ethylen/Butylen-Styrol (SEBS), Styrol-Isopren/Butylen-Styrol (SIBS) und Styrol-Ethylen/Propylen-Styrol (SEPS) und Polystyrolacrylat (PSA) besteht.

13. Hybrider Superkondensator nach einem der Ansprüche 1 bis 12, wobei das Verdickungspolymer aus der Gruppe ausgewählt ist, die aus Carboxymethylcellulose (CMC), Hydroxyethylcellulose (HEC), Hydroxypropylcellulose (HPC), Hydroxypropylmethylcellulose (HPMC), Polyacrylsäure (PAAc), Xanthan-Gummi, Polyvinylalkohol (PVA), Polyvinylbutyral (PVB) und Poly-(ethylenoxid) (PEO) besteht.

14. Hybrider Superkondensator nach einem der Ansprüche 1 bis 13, wobei die negative Elektrode Folgendes umfasst:
- zwischen 60 und 95 Masseprozent Aktivkohle;
- zwischen 3 und 20 Masseprozent elektronisch leitfähigen Zusatz; und
- zwischen 1 und 10 Masseprozent elastomeres Polymer und zwischen 1 und 10 Massesprozent Verdickungspolymer.

15. Verfahren zur Herstellung eines hybriden Superkondensators mit einem alkalischen Elektrolyten, der die folgenden Schritte umfasst:
a) Bereitstellen eines auf Nickel basierten Stromkollektors, wobei der Stromkollektor aus einer porösen dreidimensionalen Struktur gebildet ist, in der:
• Poren offen sind,
b) Bilden einer Paste durch Mischen von Aktivkohle mit mindestens einem elektronisch leitfähigen Zusatz und einem Bindemittel, die mindestens ein elastomeres Polymer und mindestens ein Verdickungspolymer und Wasser umfassen;
c) Aufbringen der in Schritt b) erhaltenen Paste in den Stromkollektor von Schritt a);
d) Trocknen des mit der Paste überzogenen Stromkollektors;
e) Komprimieren oder Kalandrieren des mit der Paste überzogenen Stromkollektors, um eine negative Elektrode zu bilden;
f) Bereitstellen mindestens einer positiven Elektrode, die ein auf Nickel basiertes Hydroxyd und einen auf Nickel basierten Stromkollektor umfasst;
g) Bereitstellen mindestens eines Separators;
h) Stapeln mindestens einer positiven Elektrode, mindestens eines Separators und mindestens einer negativen Elektrode;
i) Einbringen des Stapels in einen Behälter; und
j) Füllen des Behälters mit einem alkalischen Elektrolyten,
wobei das Verfahren **dadurch gekennzeichnet ist, dass** der mittlere Durchmesser der offenen Poren größer oder gleich 100 µm und kleiner oder gleich 300 µm ist; und dass zwei benachbarte offene Poren (1, 2) durch mindestens eine Öffnung (5) kommunizieren, deren mittlerer Durchmesser größer oder gleich 35 µm und kleiner oder gleich 130 µm ist.

## Claims

1. A hybrid supercapacitor comprising:
- an alkaline electrolyte;
- at least one separator;
- at least one positive electrode comprising a nickel-based hydroxide and a nickel-based current collector; and
- at least one negative electrode comprising a nickel-based current collector, said current collector of the negative electrode being made of a porous three-dimensional structure wherein:
• some pores are open,
• said porous three-dimensional structure is coated with a mixture comprising:
• at least one activated carbon;
• at least one electron-conducting additive; and
• a binding agent comprising at least one elastomer polymer and at least one thickening polymer,
the hybrid supercapacitor being **characterized in that**:
the mean diameter of the open pores is greater than or equal to 100 urn and being less than or equal to 300 µm ; and two contiguous open pores (1, 2) communicate via at least one opening (5) the mean diameter of which is greater than or equal to 35 µm and less than or equal to 130 µm.

2. The hybrid supercapacitor according to claim 1, wherein the volume occupied by the open pores accounts for at least 50% of the volume of the current collector, preferably at least 90% of the volume of the current collector, preferably at least 95% of the volume of the current collector.

3. The hybrid supercapacitor according to claim 1 or 2, wherein the current collector of the negative electrode has a thickness between 0.3 and 1 mm.

4. The hybrid supercapacitor according to any one of claims 1 to 3, wherein the greatest dimension of an open pore (1, 2) is greater than the greatest dimension of the opening (5) connecting this pore to a contiguous open pore.

5. The hybrid supercapacitor according to any one of claims 1 to 4, wherein the current collector of the negative electrode has a basis weight between 3 g/dm² and 6 g/dm².

6. The hybrid supercapacitor according to any one of claims 1 to 5, wherein the mean diameter of the open pores (1, 2) is between 150 µm and 250 µm and the mean diameter of the openings (5) is between 50 µm and 100 µm.

7. The hybrid supercapacitor according to any one of claims 1 to 6, wherein the activated carbon has a specific active surface area greater than or equal to 500 m²/g, preferably greater than or equal to 900 m²/g.

8. The hybrid supercapacitor according to any one of claims 1 to 7, wherein the activated carbon is in the form of particles of a diameter between 2 and 20 µm.

9. The hybrid supercapacitor according to any one of claims 1 to 8, wherein the activated carbon includes a quantity of oxygen measured by X-ray fluorescence greater than 3 atomic %.

10. The hybrid supercapacitor according to any one of claims 1 to 9, wherein the electron-conducting additive is chosen from the group consisting of carbon black, graphite, graphene, carbon fibers, carbon nanotubes and a mixture thereof.

11. The hybrid supercapacitor according to any one of claims 1 to 10, wherein the binding agent is free of polytetrafluoroethylene (PTFE).

12. The hybrid supercapacitor according to any one of claims 1 to 11, wherein the elastomer polymer is chosen from the group consisting of Styrene-Butadiene (SBR), Styrene-Isoprene (SI), Styrene-ethylene/butylene (SEB), Styrene-Isoprene/butylene (SIB), Styrene-ethylene/propylene (SEP), Styrene-Butadiene-Styrene (SBS), Styrene-Isoprene-Styrene (SIS), Styrene-ethylene/butylene-Styrene (SEBS), Styrene-Isoprene/butylene Styrene (SIBS) and Styrene-ethylene/propylene-Styrene (SEPS) and polystyrene acrylate (PSA).

13. The hybrid supercapacitor according to any one of claims 1 to 12, wherein the thickening polymer is chosen from the group consisting of carboxymethylcellulose (CMC), hydroxyethylcellulose (HEC), hydroxypropylcellulose (HPC), hydroxypropylmethylcellulose (HPMC), polyacrylic acid (PAAc), xanthane gum, polyvinyl alcohol PVA, polyvinyl butyral (PVB) and poly(ethylene oxide) (PEO).

14. The hybrid supercapacitor according to any one of claims 1 to 13, wherein the negative electrode comprises:
- between 60 and 95% by weight of activated carbon;
- between 3 and 20% by weight of electron-conducting additive; and
- between 1 and 10% by weight of elastomer polymer and between 1 and 10% by weight of thickening polymer.

15. A method for manufacturing a hybrid supercapacitor with an alkaline electrolyte comprising the following steps:
a) providing a nickel-based current collector, said current collector being made of a porous three-dimensional structure wherein:
- some pores are open,
b) forming a paste by mixing activated carbon with at least one electron-conducting additive and a binding agent comprising at least one elastomer polymer and at least one thickening polymer and water;
c) depositing the paste obtained in step b) in the current collector of step a);
d) drying the current collector coated with the paste;
e) compressing or calendering the current collector coated with the paste to form a negative electrode;
f) providing at least one positive electrode comprising a nickel-based hydroxide and a nickel-based current collector;
g) providing at least one separator;
h) stacking at least one positive electrode, at least one separator and at least one negative electrode;
i) introducing the stack into a container; and
j)filling the container with an alkaline electrolyte,
the method being **characterized in that** the mean diameter of the open pores is greater than or equal to 100 µm and being less than or equal to 300 µm ; and two contiguous open pores (1, 2) communicate via at least one opening (5) the mean diameter of which is greater than or equal to 35 µm and less than or equal to 130 µm.
